# EUROPEAN PATENT APPLICATION

(11) **EP 3 470 267 A1**
(43) Date of publication of application: **17.04.2019**
(21) Application number: 17382684.3
(22) Date of filing: 13.10.2017
(51) Int. Cl.: B60Q 1/068, B60Q 1/10

(54) **AUTOMOTIVE LAMP WITH ENHANCED DAMPING OF VIBRATIONS**

(71) Applicant: Valeo Iluminacion, 23600 Martos (ES)
(72) Inventor: RUBIA, Juan-Antonio, 23600 Martos (ES); GARCIA, Isidro, 23600 Martos (ES); GOMEZ, Manuel, 23600 Martos (ES)
(74) Representative: Schaffner, Jean

(57) **Abstract**

A ball socket (100) for fixing and aiming an optical block of an automotive lamp, the ball socket (100) comprising: a first portion (110) comprising a cavity (111) adapted to receive an element (501) for rotation of the ball socket (100); a second portion (120) adapted to mate to a component (200) for supporting the optical block; and a pivot adapted to provide the ball socket (100) with a pivoting axis (150). Also, a method for producing an assembly (300) for fixing and aiming an optical block of an automotive lamp, and a method for manufacturing a pivotal ball socket (100).

## Description

### TECHNICAL FIELD

The present invention relates to the field of lighting devices for motor vehicles. More specifically, the invention relates to a ball socket for such lighting devices that fixes and aims an optical block thereof.

### STATE OF THE ART

Motor vehicles require lighting devices for the safety of drivers and passengers. Lighting devices provide the necessary light when there is no good visibility; they are also useful for informing other drivers of the maneuvers that a driver of a vehicle is performing or is about to perform.

In the automotive industry, everything that relates to the correct operation of the lighting devices is of big importance since the effect of poor light conditions may lead to accidents of one or more vehicles. Accordingly, automotive lamps are continuously enhanced with new or evolved features that improve the driving experience (e.g. more reliable light sources, less fluctuations in the intensity of the light provided, etc.) and/or the operation of the vehicle itself (e.g. lighting devices with lower power consumption, lighter lighting devices, etc.).

A recurring problem of automotive lamps is that they are prone to mechanical vibrations due to weak mating to, or mechanical coupling with, the bodywork of the motor vehicle. Since automotive lamps such as the ones providing a low beam function are generally aimed downwards so as to provide light on the road, when they vibrate there is a high risk of dazzling an oncoming driver: the lamps may be temporarily aimed more upwards than permitted by regulation.

This problem is further exacerbated when the lamps include LED-powered light sources (a type of light source that is progressively replacing other lighting technologies in motor vehicles). Nowadays, light sources based on LED technology are generally heavier than other automotive lighting technologies, such as halogen-powered light sources, due to the addition of heatsinks that assist in cooling down the LEDs. The light provided by LEDs worsens as the temperature increases, therefore it is necessary to keep the temperature within a determined range. As LED-based lighting modules are heavy, they are prone to larger mechanical vibrations unless they are reliably coupled with the bodywork of the motor vehicle.

The mechanical vibrations that the automotive lamps undergo may be larger when the motor vehicle is, for example, decelerating. In this sense, the forces exerted on the vehicle while it is braking cannot be neglected. Hence, the automotive lamps must be adapted so that, when the vehicle brakes and there is a large deceleration, they do not affect the cut-off stability, namely, they do not dazzle other drivers because the light provided is beyond the allowed region of the corresponding photometric chart.

Patent document DE-102008014823-A1 attempts to address a similar issue. The patent document describes a headlamp for a motor vehicle intended to reduce the mechanical vibrations of a light module therein. The headlamp is provided with a vibration damper. The vibration damper provides a counter-oscillation (by means of a mass and a spring-elastic connection) that counteracts the vibrations of the headlamp.

Other attempts in the prior art to reduce vibrations relate to adding a pivot to, for instance, a bracket within the lamp that supports the optical block. Owing to the pivot, the optical block may be rotated, however, due to limitations in the manufacturing of the pivot (the surfaces thereof are rough and do not feature a polished material), there is a high friction between the components resulting in aiming torques that are beyond acceptable levels. Further, the pivot may be produced with what is generally referred to as a parting line, that is to say, the pivot features an irregular or discontinuous geometry (because two mold halves are used for manufacturing the pivot, and these become misaligned during the process) that may collide with the housing of the automotive lamp; this increases the friction between the pivot and the housing, something which has a negative impact on the aiming torque.

It would be desirable to have an automotive lamp that is less prone to mechanical vibrations and which makes possible to vertically aim the optical block therein in a controlled manner. Further, it would also be desirable to have an automotive lamp that further dampens vibrations that may occur while driving the motor vehicle, particularly mechanical vibrations in the vertical direction.

### DESCRIPTION OF THE INVENTION

A first aspect of the invention relates to a ball socket for fixing and aiming an optical block of an automotive lamp, the ball socket comprising: a first portion comprising a cavity adapted to receive an element for rotation of the ball socket; a second portion adapted to mate to a component for supporting the optical block; and a pivot adapted to provide the ball socket with a pivoting axis.

The ball socket can be rotated around the pivoting axis for aiming the optical block. The element for rotation of the ball socket, which in some examples is part of an aiming mechanism with an element that fits within the cavity, may adjust the angle of the ball socket with respect to the pivoting axis thereby adjusting the angle of the optical block and, thus, the light produced.

Since the pivot restricts the movement of the ball socket to one axis, the ball socket and thus the optical block are restrained from moving in all directions, something which makes possible to reduce the mechanical vibrations undergone by the optical block. Further, as the second portion of the ball socket mates the component that will support the optical block, this second portion also limits the amount of vibrations undergone by the optical block. The ball socket may withstand the weight of optical blocks that may be heavy, for instance optical blocks based on LED technology that are heavier than those based on halogen technology.

A ball socket with such pivot may be manufactured with more ease than a pivot being added to a bracket as in the prior art. Additionally, since the pivot is integrated with the ball socket, the volume required in the automotive lamp is less than in the prior art.

In some embodiments, the pivot is injected into the ball socket.

With the injection of the pivot into the ball socket, manufacturing of the ball socket may be simpler and more cost-effective than with other manufacturing techniques since the ball socket itself may be manufactured by injection.

Moreover, as the ball socket (rather than a bracket) may have no structural elements that would collide with the pivot during the manufacturing of the same, the molds of the pivot may include some sliders that make possible to form the pivot without parting lines. In some embodiments, the material of the ball socket and/or the pivot is thermoplastic material such as polyoxymethylene (i.e. POM), polytetrafluoroethylene (i.e. PTFE), or polyamide (i.e. PA).

In some embodiments, the pivot comprises two pivoting elements aligned with the pivoting axis. Preferably, in these embodiments, the two pivoting elements are injected into the ball socket on opposite sides of the ball socket.

The use of two pivoting elements may further limit vibrations of the optical block in axes different to the pivoting axis. As the two pivoting elements reduce the play of the ball socket, the ball socket may have less freedom to move other than for rotating around the pivoting axis.

In some embodiments, the pivot and/or the pivoting elements comprise a cylindrical or a tubular shape.

In some embodiments, the pivoting axis is in a radial direction of the ball socket.

The ball socket may rotate around the pivoting axis such that the motion of the optical block is in a direction that may be a vertical direction (preferably with respect to the road or the horizontal), thereby allowing adjusting an angle of the optical block.

In some embodiments, the pivot comprises a low friction material. A low friction material features a coefficient of static friction smaller than or equal to 0,40, and more preferably a coefficient of static friction smaller than or equal to 0,30 and/or 0,20, and greater than 0,00. Further, a low friction material features a coefficient of kinetic friction smaller than 0,40, and more preferably a coefficient of kinetic friction smaller than or equal to 0,30 and/or 0,20, and greater than 0,00. Exemplary low friction materials are POM, PTFE and PA. Preferred standard methods for measuring coefficients of friction are ASTM D1894-14 and ASTM D3702-94(2014).

As the friction coefficient of the material becomes larger, so does the torque necessary for aiming the optical block, thus becoming more difficult to aim the optical block. When the ball socket (or an assembly comprising the ball socket) is included in an automotive lamp that includes a housing with guides adapted to receive the pivot of the ball socket, the housing restricts the movement of the ball socket (generally in the vertical direction). A low friction material alleviates the restriction of movement and thus the ball socket may move with more ease.

In some embodiments, the pivoting axis intersects the cavity.

If the pivot of the ball socket is provided such that the pivoting axis (referring to an imaginary line representing such pivoting axis) intersects the cavity of the first portion, the ball socket may be less prone to mechanical vibrations that would affect the stability of the optical block. In this sense, the closer to the center of the cavity the pivoting axis is, the lower the vibrations and the intensity of the same affect the ball socket and, thus, the optical block. Additionally, providing the pivoting axis closer to the center of the cavity also reduces the vertical displacement of the ball socket upon rotation.

Ideally, the pivoting axis is provided such that it is aligned with the center of the cavity. In this case, the ball socket only rotates and does not change its position, something that may prevent the ball socket from colliding with a housing of the automotive lamp upon rotation of the ball socket.

In some embodiments, the second portion comprises at least two wings. Preferably, in these embodiments, each of the at least two wings comprises at least one protruding element adapted to engage with a groove of the component for supporting the optical block.

The wings may reinforce the structure of the ball socket, that is, they may mechanically reinforce the ball socket. Additionally, the wings may provide an enhanced mating of the ball socket to the component for supporting the optical block and the bodywork of the motor vehicle since they may be inserted within pairs of plates or ribs of the component. This, in turn, makes possible to withstand the weight of heavier optical blocks and maintain the ball socket mated to the component even if vibrations take place.

The protruding elements may further enhance the mating of the ball socket to the component since they may be inserted in grooves of the component, thereby reducing the play between the two. Also, when the ball socket and the component are subject to vibrations, the protruding elements may assist in maintaining the ball socket mated to the component and absorbing, at least partially, the vibrations.

In some embodiments, the second portion comprises at least two disc-shaped elements spaced along an axial direction of the ball socket and adapted to fit within a tubular cavity of the component.

When the ball socket is mated to the component, the disc-shaped elements may be inserted in the tubular cavity of the component and oppose against relative movement between the ball socket and the component.

A second aspect of the invention relates to an assembly for fixing and aiming an optical block of an automotive lamp, the assembly comprising:
a component for supporting the optical block; and
a ball socket according to the first aspect of the invention, the ball socket being mated to the component.

The assembly may be provided within an automotive lamp so as to be attached to an optical block that shall be fixed and aimed.

The component of the assembly may support the optical block either by being attached to it or by being attached to another component (e.g. a housing with guides coupled to the component) in turn attached to the optical block; in both cases, the component supports part or the entirety of the weight of the optical block and makes possible to aim the optical block (as a result of the aiming of the ball socket).

In some embodiments, the component comprises: a tubular portion; and at least two plates, each of the at least two plates comprising a groove.

The tubular portion of the component may be mated to the ball socket by receiving a portion thereof in the cavity of the tubular portion. In this regard, a portion of the ball socket may fit inside said cavity. In those embodiments in which the second portion of the ball socket comprises at least two disc-shaped elements spaced along an axial direction of the ball socket, the disc-shaped elements may fit inside the cavity of the tubular portion. The disc-shaped elements may prevent the ball socket from decoupling from the component as they block the movement of the ball socket relative to the component.

The plates may also enhance the mating of the ball socket to the component since, owing to these plates, part of the geometry of the component may be complementary to part of the geometry of the ball socket. Similarly, the groove or grooves formed in the plates may also have a geometry complementary to that of some protruding elements of the ball socket (in those embodiments in which the ball socket comprises said protruding elements).

Similar advantages as those described for the first aspect of the invention may also be applicable to the second aspect of the invention.

A third aspect of the invention relates to an automotive lamp comprising: an optical block; and an assembly according to the second aspect of the invention, the assembly supporting the optical block.

In some embodiments, the automotive lamp is a headlamp.

The automotive lamp may be, for instance, a lamp for a low beam function of a motor vehicle. The low beam function is the lighting function of a motor vehicle that more problems may cause when the corresponding optical block is subject to vibrations or displacements and, thus, vary the angle at which the light is provided from the lamp. An automotive lamp with a low beam function that is incorrectly configured or is subject to external movements may not provide the driver with the light necessary for safe driving and/or may dazzle oncoming drivers.

In some embodiments, the automotive lamp further comprises a housing with guides adapted to receive the pivot of the assembly.

The housing of the automotive lamp may mechanically couple the automotive lamp with the bodywork of the vehicle. The guides thereof may allow the movement of the assembly and adjusting the angle of the ball socket and, thus, the angle of the optical block.

In some embodiments, the automotive lamp comprises a LED light source and a heatsink.

Similar advantages as those described for the first and/or second aspects of the invention may also be applicable to the third aspect of the invention.

A fourth aspect of the invention relates to a method for producing an assembly for fixing and aiming an optical block of an automotive lamp, the method comprising: providing a ball socket, the ball socket comprising: a first portion comprising a cavity adapted to receive an element for rotation of the ball socket, and a second portion adapted to mate to a component for supporting the optical block; mating the ball socket to the component for supporting the optical block; and providing a pivot in the ball socket thereby providing the ball socket with a pivoting axis.

By providing the ball socket with a pivot, the ball socket may be rotated around the pivoting axis. Upon rotation of the ball socket with the element received in the cavity, the component for supporting the optical block and the optical block itself may both be rotated around the same pivoting axis. This allows regulating the angle of the optical block with respect to a plane such as the horizontal or a plane containing the road on which the corresponding motor vehicle is moving.

The pivot may, additionally, reduce the mechanical vibrations that the ball socket is subject to since it limits the movements of the same.

In some embodiments, providing the pivot in the ball socket comprises providing two pivoting elements aligned with the pivoting axis. In some of these embodiments, the two pivoting elements are injected into the ball socket on opposite sides of the ball socket.

In some embodiments, the pivoting axis is in a radial direction of the ball socket.

In some embodiments, the pivot comprises a low friction material, that is, a material featuring a coefficient of static friction smaller than or equal to 0,40, and more preferably a coefficient of static friction smaller than or equal to 0,30 and/or 0,20, and greater than 0,00. Such material also features a coefficient of kinetic friction smaller than 0,40, and more preferably a coefficient of kinetic friction smaller than or equal to 0,30 and/or 0,20, and greater than 0,00.

In some embodiments, the pivoting axis intersects the cavity.

In some embodiments, the second portion comprises at least two wings. In some of these embodiments, each of the at least two wings comprises at least one protruding element adapted to engage with a groove of the component for supporting the optical block.

In some embodiments, the second portion comprises at least two disc-shaped elements spaced along an axial direction of the ball socket and adapted to fit a tubular cavity of the component.

Similar advantages as those described for the first, second and/or third aspects of the invention may also be applicable to the fourth aspect of the invention.

A fifth aspect of the invention relates to a method for manufacturing a pivotal ball socket, the method comprising: providing the ball socket; and injecting a pivot into the ball socket.

In some embodiments, injecting the pivot into the ball socket comprises injecting two pivoting elements into the ball socket on opposite sides of the ball socket, the two pivoting elements being aligned with a pivoting axis.

In some embodiments, the pivot comprises a same material of the ball socket.

The material of the pivot and the ball socket may be thermoplastic material such as polyoxymethylene (i.e. POM), polytetrafluoroethylene (i.e. PTFE), or polyamide (i.e. PA).

Similar advantages as those described for the first, second, third and/or fourth aspects of the invention may also be applicable to the fifth aspect of the invention.

### BRIEF DESCRIPTION OF THE DRAWINGS

To complete the description and in order to provide for a better understanding of the invention, a set of drawings is provided. Said drawings form an integral part of the description and illustrate embodiments of the invention, which should not be interpreted as restricting the scope of the invention, but just as examples of how the invention can be carried out. The drawings comprise the following figures:
Figures 1A-1B show a ball socket in accordance with an embodiment of the invention.
Figure 2 shows a component of an assembly in accordance with an embodiment of the invention.
Figure 3 shows an assembly in accordance with an embodiment of the invention.
Figures 4A-4B partially show an automotive lamp in accordance with an embodiment of the invention.
Figure 5 partially shows an automotive lamp in accordance with an embodiment of the invention.

### DESCRIPTION OF WAYS OF CARRYING OUT THE INVENTION

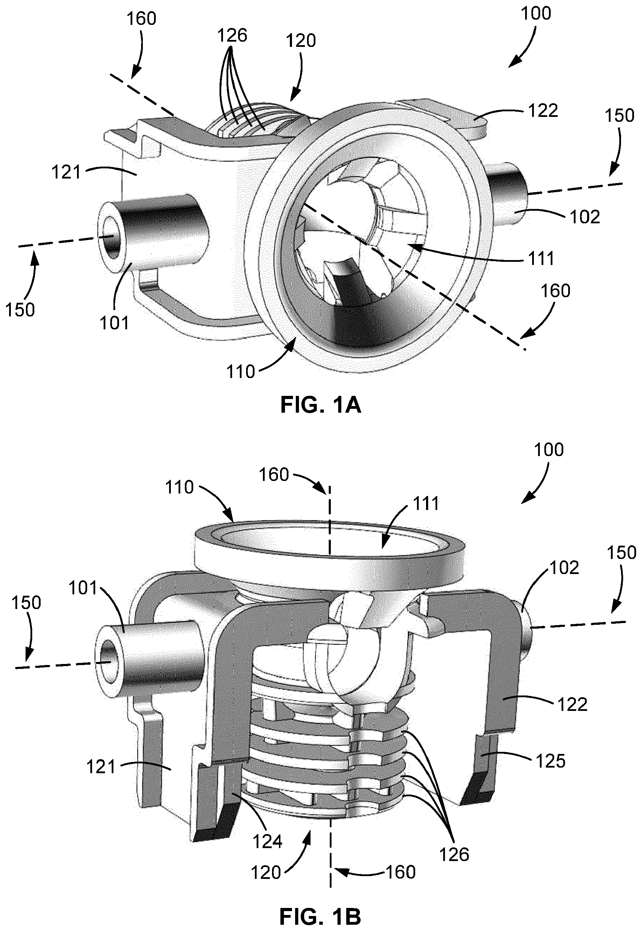

Figures 1A-1B show, from different perspectives, a ball socket 100 in accordance with an embodiment of the invention.

The ball socket 100 comprises a pivot in turn comprising a first pivoting element 101 and a second pivoting element 102. The ball socket 100 further comprises a first portion 110 with a cavity 111 formed therein, and a second portion 120 adapted to mate to a component for supporting an optical block. The cavity 111 is adapted to receive an element that may rotate the ball socket 100; such element may feature, for instance, a spherical or semi-spherical geometry.

The pivot defines a pivoting axis 150 (shown with a dashed line for illustrative purposes only) in the radial direction of the ball socket 100 around which the ball socket 100 may rotate. The first pivoting element 101 is aligned with the second pivoting element 102, and both the first and second pivoting elements 101, 102 are aligned with the pivoting axis 150. The first and second pivoting elements 101, 102 preferably feature a cylindrical or a tubular geometry, however it is readily apparent that other geometries are also possible within the scope of the present disclosure. In a preferred embodiment such as the one of Figures 1A-1B, the dashed line representing the pivoting axis 150 goes through the cavity 111, that is, the pivoting axis 150 intersects the cavity 111 (i.e. the volume thereof); preferably, the pivoting axis 150 intersects the center of the cavity 111.

The second portion 120 of the ball socket 100 comprises a first wing 121 on a first side of the ball socket 100 and a second wing 122 on a second side of the ball socket 100, the first side being a side opposite to the second side. The first and second wings 121, 122 may mechanically reinforce the ball socket 100. With regards to the example of Figures 1A-1B, the first pivoting element 101 goes through the first wing 121, whereas the second pivoting element 102 goes through the second wing 122. Each of the first and second wings 121, 122 is provided with a protruding element 124, 125 adapted to be inserted in a groove of a component for supporting the optical block thereby improving the mating of the ball socket 100 to the component. Further, the ball socket 100 comprises a plurality of disc-shaped elements 126 that are spaced along an axial direction 160 (represented with dashed lines for illustrative purposes only) of the ball socket 100. The plurality of disc-shaped elements 126 are molded in the ball socket 100 and made up of the same material of the ball socket 100, for example POM, PTFE, or PA. The disc-shaped elements 126 are adapted to fit within a cavity of a tubular portion of the component.

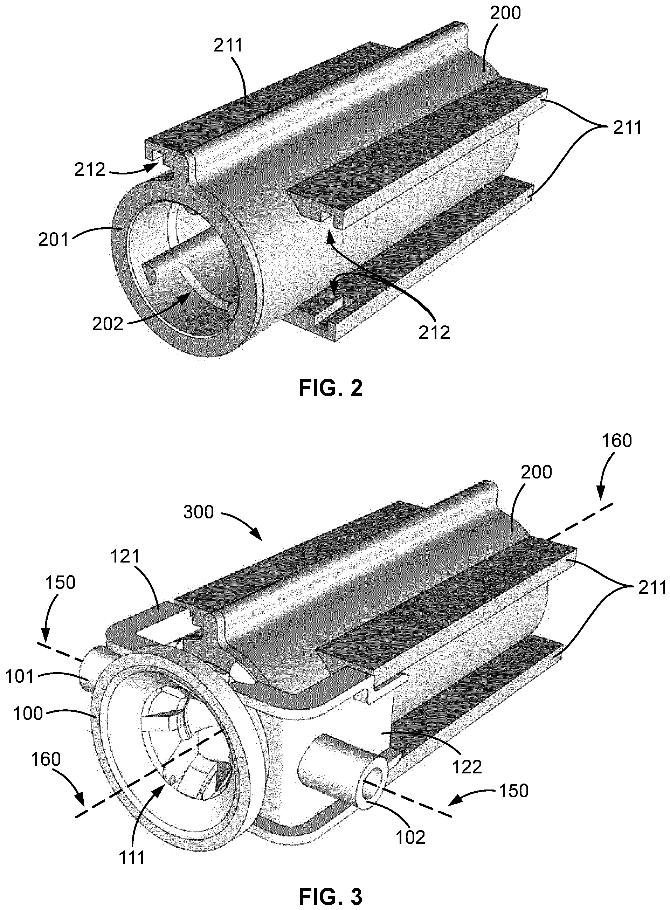

Figure 2 shows a component 200 for supporting an optical block of an automotive lamp.

The component 200 is adapted to mate to a ball socket (for instance the ball socket 100 of Figures 1A-1B). The component 200 comprises a tubular portion 201 with a cavity 202 therein, and a plurality of plates 211 each comprising a groove 212 for receiving an element with a fitting geometry. The component 200 may be, for example, a reflector pad.

A ball socket may be mated to the component 200 by being introduced within the tubular portion 201: a geometry of the ball socket may be adapted to fit inside the cavity 202. In this way, the ball socket may be mated to the component 200 by the friction produced between the two since the geometry of the ball socket fitting inside the cavity 202 may be complementary with the geometry of the cavity 202. The ball socket may also be mated to the component 200 by anchoring: the ball socket may include elements that hold the ball socket within the cavity 202; in this sense, the tubular portion 201 may include grooves or recesses where the elements may attach to for anchoring the ball socket.

Additionally or alternatively, the ball socket may be mated to the component 200 by fitting part of its geometry within two plates 211, and/or by inserting protruding elements in the grooves 212.

In preferred embodiments, the ball socket mates with the component 200 by means of all the aforementioned structural features, thereby providing a more reliable mechanical connection between the ball socket and the component 200 and allowing to withstand optical blocks that are heavier in weight.

Figure 3 shows an assembly 300 in accordance with an embodiment of the invention.

The assembly 300 comprises the ball socket 100 and the component 200 for supporting an optical block.

The ball socket 100 is mated to the component 200: a portion of the second portion 120 is inserted in the cavity 202 of the tubular portion 201 (the perimeter of the plurality of disc-shaped elements 126 may collide with the inner perimeter of the tubular portion 201 thereby producing a friction that opposes against the relative movement between the ball socket 100 and the component 200); a portion of the first and second wings 121, 122 is inserted between two plates 211; and the protruding elements 124, 125 of the first and second wings 121, 122, respectively, are inserted in the grooves 212 of the plates 211.

Upon rotation of the ball socket 100 around the pivoting axis 150, the entire assembly 300 is rotated around the pivoting axis 150. Consequently, when an optical block is fixed to the assembly 300, the optical block rotates as well as it follows the same motion of that of the ball socket 100 and, thus, the component 200 and the assembly 300.

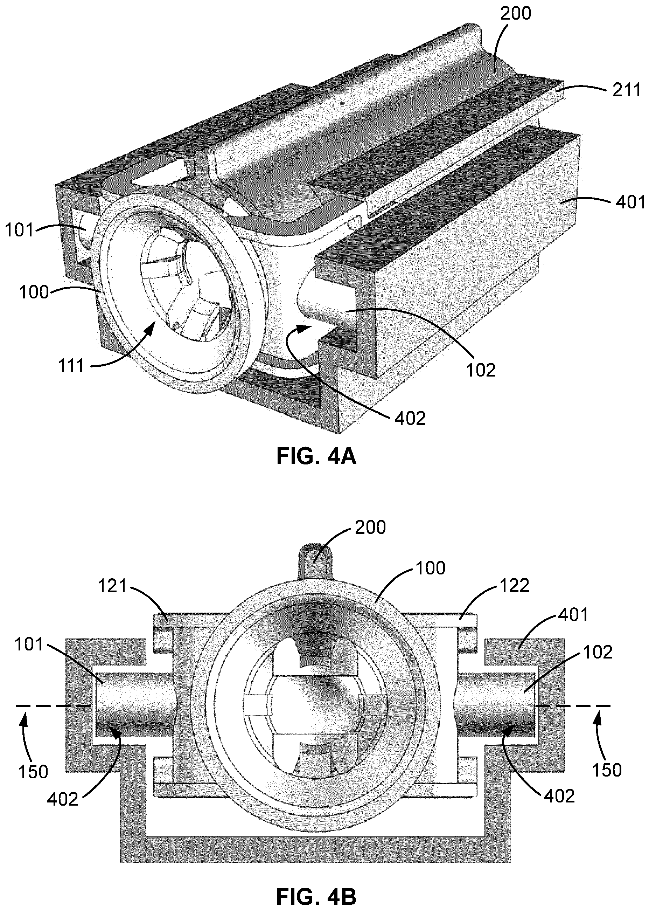

Figures 4A-4B partially show an automotive lamp in accordance with an embodiment of the invention.

The automotive lamp includes the assembly 300 and a housing 401.

The housing 401 includes guides 402 for receiving the assembly 300 and making possible the movement of the same 300 in an axial direction. Particularly, the guides are adapted to receive the pivot (e.g. the first and second pivoting elements 101, 102 of the ball socket 100). In this regard, the pivot may be manufactured with a low friction material so that the ball socket 100 may move with more ease with respect to the housing 401 (the guides 402 thereof); the use of a low friction material reduces the torque that must be applied to the ball socket 100 for aiming an optical block.

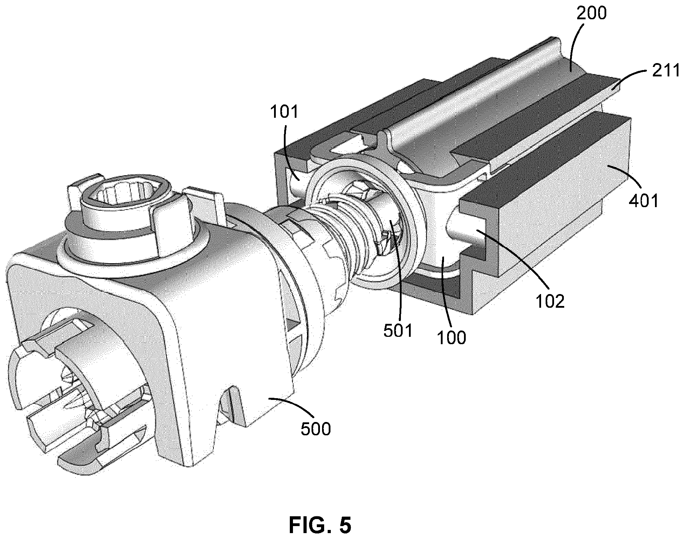

Figure 5 partially shows an automotive lamp in accordance with an embodiment of the invention.

The automotive lamp includes the assembly 300, the housing 401, and a mechanism 500 for rotating the ball socket 100.

The mechanism 500 is provided with an element 501 featuring an end with a spherical or semi-spherical geometry that is received in the cavity 111 of the ball socket 100. The mechanism 500, through the element 501, may rotate the ball socket 100 with respect to the pivoting axis 150 that delimits the motion of the same.

In this text, the term "comprises" and its derivations (such as "comprising", etc.) should not be understood in an excluding sense, that is, these terms should not be interpreted as excluding the possibility that what is described and defined may include further elements, steps, etc.

The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A ball socket (100) for fixing and aiming an optical block of an automotive lamp, the ball socket (100) comprising:
a first portion (110) comprising a cavity (111) adapted to receive an element (501) for rotation of the ball socket (100); and
a second portion (120) adapted to mate to a component (200) for supporting the optical block;
**characterized in that**
the ball socket (100) further comprises a pivot adapted to provide the ball socket (100) with a pivoting axis (150).

2. The ball socket of claim 1, wherein the pivot comprises two pivoting elements (101, 102) aligned with the pivoting axis (150), the two pivoting elements (101, 102) being preferably injected into the ball socket (100) on opposite sides of the ball socket (100).

3. The ball socket of any of claims 1-2, wherein the pivoting axis (150) is in a radial direction of the ball socket (100).

4. The ball socket of any of claims 1-3, wherein the pivot comprises a low friction material.

5. The ball socket of any of claims 1-4, wherein the pivoting axis (150) intersects the cavity (111).

6. The ball socket of any of claims 1-5, wherein the second portion (120) comprises at least two wings (121, 122), each of the at least two wings (121, 122) preferably comprising at least one protruding element (124, 125) adapted to engage with a groove (212) of the component (200) for supporting the optical block.

7. An assembly (300) for fixing and aiming an optical block of an automotive lamp, the assembly (300) comprising:
a component (200) for supporting the optical block, the component (200) comprising:
a tubular portion (201); and
at least two plates (211), each of the at least two plates preferably comprising a groove (212);
a ball socket (100) according to any of claims 1-6, the ball socket (100) being mated to the component (200).

8. An automotive lamp comprising:
an optical block; and
an assembly (300) according to claim 7, the assembly (300) supporting the optical block.

9. The automotive lamp of claim 8, further comprising a housing (401) with guides (402) adapted to receive the pivot of the assembly (300).

10. A method for producing an assembly (300) for fixing and aiming an optical block of an automotive lamp, the method comprising:
providing a ball socket (100), the ball socket (100) comprising:
a first portion (110) comprising a cavity (111) adapted to receive an element (501) for rotation of the ball socket (100); and
a second portion (120) adapted to mate to a component (200) for supporting the optical block;
mating the ball socket (100) to the component (200) for supporting the optical block;
**characterized in that**
the method further comprises providing a pivot in the ball socket (100) thereby providing the ball socket (100) with a pivoting axis (150).

11. The method of claim 10, wherein providing the pivot in the ball socket (100) comprises providing two pivoting elements (101, 102) aligned with the pivoting axis (150), the two pivoting elements (101, 102) being preferably injected into the ball socket (100) on opposite sides of the ball socket (100).

12. The method of any of claims 10-11, wherein the pivoting axis (150) is in a radial direction of the ball socket (100).

13. A method for manufacturing a pivotal ball socket (100), the method comprising providing the ball socket (100), **characterized in that** the method further comprises injecting a pivot into the ball socket (100).

14. The method of claim 13, wherein injecting the pivot into the ball socket (100) comprises injecting two pivoting elements (101, 102) into the ball socket (100) on opposite sides of the ball socket (100), the two pivoting elements (101, 102) being aligned with a pivoting axis (150).

15. The method of any of claims 13-14, wherein the pivot comprises a same material of the ball socket (100).
